# EUROPÄISCHE PATENTSCHRIFT

(11) **EP 0 958 086 B1**
(45) Veröffentlichungstag und Bekanntmachung des Hinweises auf die Patenterteilung: **06.06.2001**
(21) Anmeldenummer: 98909330.7
(22) Anmeldetag: 04.02.1998
(51) Int. Cl.: B23D 31/00

(54) **VERFAHREN UND VORRICHTUNG ZUM BRUCHTRENNEN**
METHOD AND DEVICE FOR SEPARATING BY BREAKAGE
PROCEDE ET DISPOSITIF DE SEPARATION PAR RUPTURE

(30) Priorität: 04.02.1997 DE 19704131
(43) Veröffentlichungstag der Anmeldung: 24.11.1999
(73) Patentinhaber: Ex-Cell-O GmbH, 73054 Eislingen (DE)
(72) Erfinder: REHM, Wolfgang, D-73072 Donzdorf (DE); HENZLER, Peter, D-73035 Göppingen (DE)
(74) Vertreter: Winter, Brandl, Fürniss, Hübner, Röss, Kaiser, Polte, Partnerschaft
(86) Internationale Anmeldenummer: DE9800311
(87) Internationale Veröffentlichungsnummer: WO9833616

(56) Entgegenhaltungen:
- EP-A- 0 167 320
- WO-A-95/26257
- DE-A- 4 302 303

## Beschreibung

Die Erfindung betrifft ein Verfahren zum Trennen eines Lagerdeckels von einem Lagerstuhl eines Gehäuseblocks gemäß Oberbegriff von Patentanspruch 1 und eine Spreizeinrichtung, gemäß Oberbegriff von Patentanspruch 2, die bei einem derartigen Verfahren verwendet werden kann.

Bei Verbrennungsmotoren sind üblicherweise Antriebs- und Steuerungswellen, wie beispielsweise eine Nockenwelle oder eine Kurbelwelle über jeweils mehrere Lager im Motorgehäuseblock abgestützt. So sind beispielsweise bei der Verwendung einer 5-fach gelagerten Kurbelwelle im Kurbelgehäuse fünf Lagerbuchsen als Lagergasse koaxial und im Abstand zueinander hintereinander liegend angeordnet. Jeder der stegartigen Lagerabschnitte ist zur Vereinfachung der Montage teilbar ausgeführt und hat einen Lagerstuhl, auf der eine Lagerschale lösbar befestigt ist. Die Teilebene zwischen der Lagerschale und dem Lagerstuhl erstreckt sich durch eine Mittelebene der Lagerbohrung, die somit etwa zur Hälfte in dem Lagerstuhl und zur anderen Hälfte in der Lagerschale ausgebildet ist.

Üblicherweise ist der Lagerstuhl einstückig mit dem Motorgehäuseblock gefertigt und die die jeweilige Lagerstelle überbrückenden Lagerschalen werden als getrennte, zusätzliche Bauteile ausgebildet. Die Befestigung der Lagerschalen an dem Motorgehäuseblock erfolgt über Befestigungsschrauben, die beidseitig in der Lagerbohrung senkrecht zur Trennebene durch die Lagerschale hindurch in den Lagerstuhl eingeschraubt werden. Zur Herstellung der Lagerbohrung, die sich durch die Lagerabschnitte erstreckt, werden die Lagerschalen mit den jeweiligen Lagerstühlen verschraubt und anschließend die Lagerbohrung mittels einer Bohrstange gebohrt, wobei gewährleistet sein muß, daß die Relativposition zwischen Lagerschale und Lagerstuhl jeweils beibehalten wird, so daß die Lagerbohrungsabschnitte fluchten. Die Bearbeitung der sich entlang der Trennebene erstreckenden Anlageflächen zwischen Lagerschale und Lagerstuhl sowie die Durchgangsund Gewindebohrungen für die Befestigungsschrauben muß mit hoher Präzision erfolgen, so daß gewährleistet ist, daß die Relativanordnung der Lagerschale mit Bezug zum Lagerstuhl auch nach einem Lösen der Befestigungsschrauben wieder herstellbar ist. Diese Vorgehensweise erfordert einen erheblichen fertigungstechnischen Aufwand, der die Herstellungskosten eines Kurbelgehäuses erhöht.

Als nächstkommender Stand der Technik wird die EP 0 167 320 A2 angesehen, die ein Bruchtrennverfahren offenbart, bei dem mehrere Lagerabschnitte eines Gehäuses (beispielsweise eines Kurbelgehäuses) durch einen Spreizdorn bruchgetrennt werden. Das Bruchtrennen aller Lagerabschnitte erfolgt gleichzeitig. Die der EP0 167 320 A2 entnehmbare Lehre zielt entweder darauf, mit einem einzigen Spreizdorn gleichzeitig alle Lagerabschnitte bruchzutrennen oder aber mit einem Spreizdorn mit einer einzelnen Teilfläche alle Lagerabschnitte nacheinander bruchzutrennen. Dabei muß der Spreizdorn schrittweise von außen nach innen in die Lagergasse eingeführt werden, um die Lagerabschnitte aufeinanderfolgend bruchzutrennen. Ferner werden die beiden Schenkel eines Lagerabschnittes aufeinanderfolgend bruchgetrennt (zweistufiges Verfahren).

Demgegenüber liegt der Erfindung die Aufgabe zugrunde, ein Verfahren und eine für ein derartiges Verfahren geeignete Vorrichtung zu schaffen, mit denen bei minimalem vorrichtungstechnischen Aufwand die Fertigungskosten reduzierbar sind.

Diese Aufgabe wird hinsichtlich des Verfahrens durch die Merkmale des Patentanspruches 1 und hinsichtlich der Vorrichtung durch eine Spreizeinrichtung mit den Merkmalen des Patentanspruches 2 gelöst.

Durch die Maßnahme, die die Lagerbohrung bildenden Lagerabschnitte zunächst einstückig mit dem Gehäuseblock auszubilden und dann jeden Lagerabschnitt durch ein Bruchtrennverfahren in einen Lagerdeckel und einen Lagerstuhl zu teilen, kann eine spanabhebende Bearbeitung der Anlageflächen zwischen Lagerschale und Lagerstuhl unterbleiben, da sich beim Bruchtrennen eine individuelle Makroverzahnung ausbildet, die auch nach dem Lösen der Befestigungsschrauben eine exakte Positionierung der Lagerschale mit Bezug zum Lagerstuhl ermöglichen.

Bei dem erfindungsgemaßen Verfahren werden sämtliche Lagerabschnitte mit einer gemeinsamen Spreizeinrichtung bruchgetrennt, die in die Lagerbohrung eingeführt wird. Je nach Auslegung der Spreizeinrichtung könnten mehrere Lagerabschnitte gleichzeitig oder alle Lagerabschnitte nacheinander bruchgetrennt werden.

Im letztgenannten Fall, auf den sich die vorliegende Erfindung bezieht, ist vorgesehen, die Spreizeinrichtung zunächst vollständig in die Lagerbohrung einzuführen, so daß zunächst der innen liegende Lagerabschnitt bruchgetrennt wird und in der Folge dann durch Herausziehen der Spreizeinrichtung die weiteren, außen liegenden Lagerabschnitte bearbeitet werden. Alternativ können die Lagerabschnitte auch durch eine Vielzahl von Spreizkörpern aufeinanderfolgend bruchgetrennt werden.

Dabei kann es vorteilhaft sein, wenn die Spreizeinrichtung zwei Spreizdorne hat, die von beiden Endabschnitten der Lagerbohrung her eingeführt werden.

Das erfindungsgemäße Verfahren läßt sich besonders vorteilhaft bei Gehäuseblöcken aus Grauguß oder aus Aluminium einsetzen.

Durch die Maßnahme, während des Bruchtrennens die Lagerschale über eine senkrecht zur Trennebene wirkende Fixiereinrichtung zu fixieren, wird die Lagerschale während des Bruchtrennens parallel zum Lagerstuhl gehalten, so daß die beiden beidseitig der Lagerschale angeordneten Anlageabschnitte der Lagerschale gleichzeitig bruchgetrennt werden. Ohne die Fixiereinrichtung könnte es bei bestimmten Materialien vorkommen, daß zunächst eine Seite der Lagerschale bruchgetrennt wird und die andere Seite einer Biegeverformung unterzogen wird, bevor ein durchgehender Bruch erfolgt. Eine derartige Bruchfläche genügt nicht den Qualitätsanforderungen im Motorenbau.

Die Lagefixierung könnte durch einen Stempel oder aber durch Einschrauben derjenigen Befestigungsschrauben erfolgen, mit denen die Lagerschale bei der Montage der Kurbelwellenlager mit dem Kurbelgehäuse oder genauer gesagt, mit dem jeweiligen Lagerstuhl des Kurbelgehäuses verschraubt wird. Bei Verwendung eines Stempels, wie es in der vorliegenden Erfindung erfolgt, hat dieser vorzugsweise zwei Stempelabschnitte, über die die beidseitig der Lagerbohrung angeordneten Anlageabschnitte des Lagerstuhls gleichmäßig, d.h. senkrecht zur Trennebene beaufschlagbar sind.

Die Spreizeinrichtung kann mit zwei Spreizdornen versehen werden, über die eine in Radialrichtung erweiterbare Spreizhülse gespreizt wird, um den Lagerabschnitt bruchzutrennen. Die Axiallänge des Spreizdornes ist dabei an die Axiallänge der Lagergasse angepaßt, so daß der Spreizdorn von einer Seite her in die Lagerbohrung einführbar ist und noch der am weitesten von der Einführseite entfernte Lagerabschnitt erreichbar ist.

Für den Fall, daß die Spreizeinrichtung zwei Spreizdorne hat, die von beiden Endabschnitten der Lagerbohrung oder Lagergasse her einführbar sind, muß ein Dorn somit zumindest die halbe Axiallänge der Lagerbohrung aufweisen.

Die bei der Erfindung einsetzbare Spreizeinrichtung kann beispielsweise eine Spreizhülse mit zwei federnd miteinander verbundenen Hülsenschalen aufweisen, die gemeinsam eine sich verjüngende Innenbohrung ausbilden, in die ein konischer Abschnitt des Spreizdornes eintauchen kann, so daß bei einer Axialbewegung des Spreizdornes die beiden Hülsenschalen in Radialrichtung auseinander bewegt werden und der Lagerabschnitt mit der zum Bruchtrennen erforderlichen Kraft beaufschlagbar ist.

Wenn die Lagerabschnitte nacheinander bruchgetrennt werden, ist die Spreizhülse vorzugsweise mit einem radial erweiterten Abschnitt ausgebildet, durch den gewährleistet ist, daß diese jeweils nur an einem zu trennenden Lagerabschnitt anliegt.

In einer alternativen Ausführungsform kann die Spreizhülse auf einem Spreizdorn geführt werden, dessen Außenumfang im Querschnitt als eine Steuerkurve ausgebildet ist, so daß bei einer Relativerdrehung des Spreizdornes mit Bezug zur Spreizhülse letztere in Radialrichtung aufgeweitet wird. Bei dieser Variante erfolgt das Aufbringen der Bruchtrennkraft durch Drehen des Spreizdornes, während dieser bei der vorstehend beschriebenen Ausführungsform in Axialrichtung bewegt wurde.

Der Steuerflächenabschnitt kann beispielsweise in Form einer Evolvente gekrümmt sein.

Die letztgenannte Variante hat den Vorteil, daß bei einer entsprechenden Steuerflächenabschnittlänge die Spreizhülse entlang der gesamten Axiallänge der Lagerbohrung aufweitbar ist, so daß alle Lagerabschnitte gleichzeitig bruchtrennbar sind.

Bei einem weiteren, bevorzugten Ausführungsbeispiel der Erfindung ist die Spreizeinrichtung mit einer Vielzahl von im Axialabstand zueinander stehenden Spreizkörpern ausgebildet, die vorzugsweise federnd miteinander verbunden und an einem Hülsenträger befestigt sind. Unter dem Begriff Hülse ist dabei nicht zwangsweise ein Ringmantel zu verstehen, sondern auch ein Bauelement, das den Spreizkörper lediglich abschnittsweise, beispielsweise als Halbschale umgibt. Die Hülsenkörper und der Spreizdorn sind an den einander zuweisenden Umfangsflächen mit keilförmigen Auflauf- bzw. Spreizflächen versehen, die bei einer Axialbewegung des Spreizdorns in Anlage aneinander kommen, so daß der zugeordnete Spreizkörper in Radialrichtung nach außen bewegt wird. Die Geometrie der Flächen ist dabei so ausgewählt, daß die Spreizkörper durch eine Axialbewegung des Spreizdornes nacheinander in ihre Spreizposition bringbar sind.

Sonstige vorteilhafte Weiterbildungen der Erfindung sind Gegenstand der weiteren Unteransprüche.

Im folgenden werden bevorzugte Ausführungsbeispiele der Erfindung anhand schematischer Zeichnungen näher erläutert.
Figur 1 zeigt einen Schnitt durch eine Lagergasse eines Kurbelgehäuses;
Figur 2 zeigt eine Seitenansicht der Kurbelwellenlagerung aus Figur 1,
Figur 3 zeigt einen Querschnitt durch einen Spreizdorn und
die Figuren 4 und 5 Ansichten eines weiteren Ausführungsbeispiels einer Spreizeinrichtung.

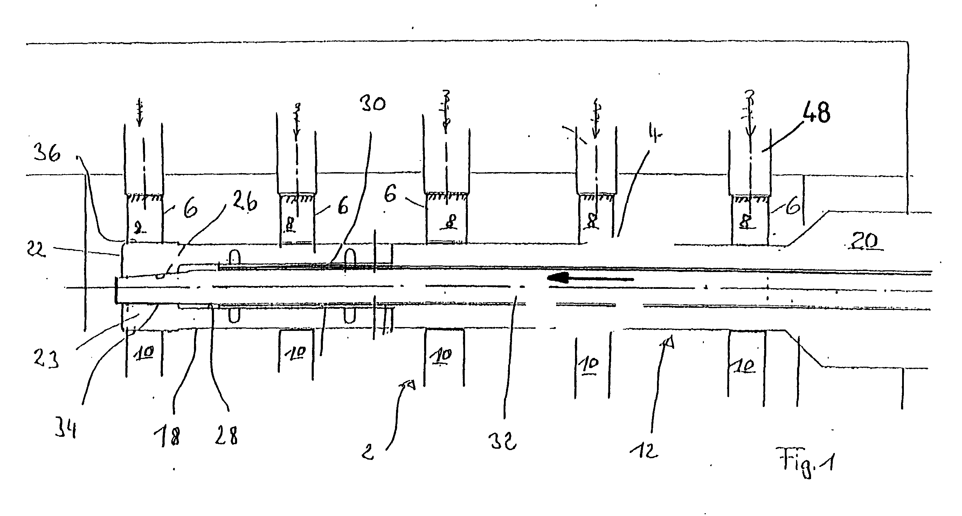

Figur 1 ist in stark vereinfachter Form der kurbelwellenlagerseitige Teil eines Motorgehäuseblocks, genauer gesagt eines Kurbelgehäuses 2 dargestellt. Zur Lagerung einer nicht dargestellten Kurbelwelle ist in dem Kurbelgehäuse 2 eine Kurbelwellen-Lagerbohrung 4 ausgebildet, die bei einer 5-fach gelagerten Kurbelwelle durch fünf im Abstand zueinander stehende stegartige Lagerabschnitte 6 gebildet ist, die jeweils von der Lagerbohrung 4 durchsetzt werden.

Das Kurbelgehäuse 2 wurde bei älteren Motorbauarten in der Regel aus Grauguß hergestellt. In jüngster Zeit geht man aufgrund der Bestrebungen zur Gewichtsreduzierung dazu über, für das Kurbelgehäuse 2 und sonstigen Motorblockgehäusebauteilen Leichtmetalllegierungen, wie beispielsweise Aluminiumlegierungen einzusetzen.

Bei der Fertigung des Kurbelgehäuses 2 wird in den Gußrohling, der einstückig mit den Lagerabschnitten 6 ausgebildet ist, zunächst die Lagerbohrung 4 eingearbeitet, wozu üblicherweise eine Bohrstange mit einer ersten Schneide zur Vorbearbeitung und einer zweiten Schneide zur Fertig- oder Feinbearbeitung eingesetzt wird. Die Bohrstange wird von einem Endabschnitt der Lagerbohrung 4 aus in das Kurbelgehäuse 2 mit den koaxial hintereinander angeordneten Lagerabschnitten 6 eingeführt, so daß ein Lagerabschnitt 6 nach dem anderen auf Maß gebracht werden kann.

Wie im folgenden noch näher auszuführenden ist, werden nach dem Fertigstellen der Lagerabschnitte 6 letztere durch einen Bruchtrennvorgang jeweils in eine Lagerschale 8 und einen Lagerstuhl 10 getrennt, wobei der Lagerstuhl 10 einstückig mit dem Kurbelgehäuse 2 ausgebildet ist und aus diesem stegartig hervorsteht. Durch die Lagerschale 8 und den Lagerstuhl 10 wird jeweils eine teilbare Aufnahme für ein Kurbelwellenlager (nicht dargestellt) gebildet, das beispielsweise als geteiltes Gleitlager ausgeführt sein kann. Die Lagerbohrung 4 bildet somit eine Grundbohrung, in welche das Gleitlager eingelegt wird.

Zum Bruchtrennen der Lagerabschnitte 6 wird eine Spreizeinrichtung 12 verwendet, über die eine Spreizkraft F auf die Umfangswandungen der Lagerbohrung 4 eines Lagerabschnittes 6 aufbringbar ist, so daß letzterer in die Lagerschale 8 und den Lagerstuhl 10 bruchgetrennt wird.

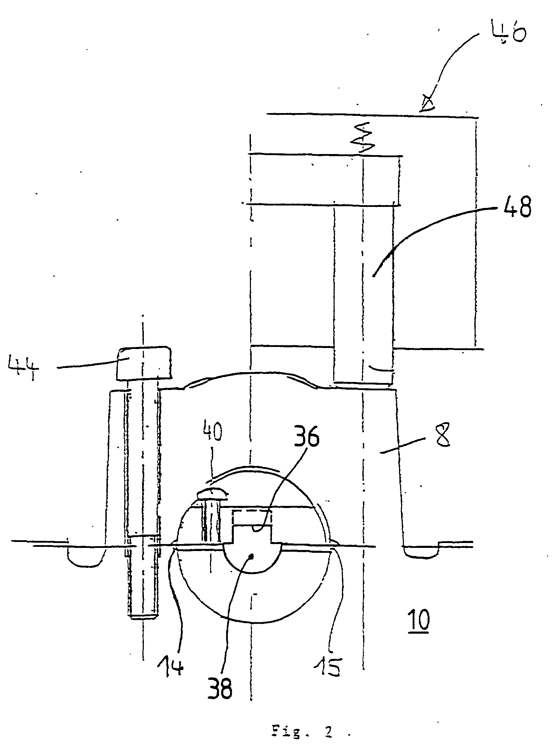

Gemäß Figur 2, die eine Seitenansicht auf das Kurbelgehäuse 2 in Figur 1 zeigt, werden in der Umfangswandung der Lagerbohrung 4 zwei einander diametral gegenüberliegende Kerben 14, 15 eingearbeitet, durch die die Bruchebene jedes Lagerabschnitts 6 vorgegeben ist.

Bei einem Bruch entlang dieser Bruchebene wird jeder Lagerabschnitt 6 somit entlang der Horizontalmittelebene der Lagerbohrung 4 (Ansicht nach Figur 2) in die stegartige, die Lagerbohrung 4 überbrückende Lagerschale 8 und den verbleibenden, am Kurbelgehäuse 2 angeordneten Lagerstuhl 10 getrennt. Die Bruchebene ist dabei durch das Materialgefüge mit Makroverzahnungen versehen, die zur Lagefixierung der Lagerschale 8 mit Bezug zum Lagerstuhl 10 beitragen. Eine derartige Paarung kann größere, parallel zur Bruchebene wirkende Kräfte aufnehmen als eine in herkommlicher Weise geschliffene Anlagefläche.

In Figur 1 ist ein Ausführungsbeispiel der Spreizeinrichtung 12 dargestellt, bei der eine Spreizhülse 18 durch zwei federnd auf einem Grundkörper 20 gelagerte Hülsenschalen 22, 23 gebildet ist.

Die aus den beiden Hülsenschalen 22, 23 gebildete Spreizhülse 18 hat an ihrem in Figur 1 linken Endabschnitt einen sich zum Endabschnitt hin verjüngenden Keilflächenabschnitt 26, dessen kleinerer Durchmesser in der Stirnseite der Spreizhülse 18 mündet und dessen größerer Durchmesser in einer radial erweiterten Aufnahmebohrung 28 mündet. In diese taucht ein hülsenförmiger Vorsprung 30 des Grundkörpers 20 ein und bildet eine Axialabstützung der Spreizhülse 18 im Bereich der Aufnahmebohrung 28.

Im Grundkörper 20 ist ein Spreizdorn 32 axial verschiebbar geführt, dessen Endabschnitt den hülsenförmigen Vorsprung 30 des Grundkörpers 20 durchsetzt und mit einem kegelförmigen Spreizabschnitt 34 in den Keilflächenabschnitt 26 eintaucht, wobei der Keilwinkel des Keilflächenabschnitts 26 und des Spreizabschnittes 34 aufeinander abgestimmt sind.

Der Außenumfang der Spreizhülse 18 ist im Bereich des Keilflächenabschnitts 26 stufenförmig zu einem Anlageabschnitt 36 erweitert. Der Außendurchmesser des Anlageabschnittes 36 ist so gewählt, daß die Spreizeinrichtung 12 in der dargestellten Grundposition in die Lagerbohrung 4 einführbar ist, wobei der Außenumfang der Spreizhülse 18 im Bereich der Aufnahmebohrung 28 geringer als der Durchmesser der Lagerbohrung 4 ist.

Wie aus Figur 2 entnehmbar ist, ist der Spreizdorn 32 im Bereich des Spreizabschnittes 34 konisch ausgebildet, wobei ein sich an den Spreizabschnitt 34 anschließendes Führungsteil 38 des Spreizdornes 32 in einer entsprechend ausgeformten Führungsnut des Grundkörpers 20 geführt ist.

Die beiden Hülsenschalen 22, 23 sind mittels Befestigungsschrauben 40 im Grundkörper 30 derart befestigt, daß bei einer Axialverschiebung des Spreizdornes 32 in Pfeilrichtung und dem daraus resultierenden Auflaufen des Spreizabschnittes 34 auf den Keilflächenabschnitt 26 die Anlageabschnitte 36 in Radialrichtung auseinander bewegbar sind, so daß die zur Bruchtrennnung erforderliche Kraft aufbringbar ist. Die Hülsenschalen 22, 23 wirken somit praktisch als elastisch verformbare Blattfedern, die auf dem Grundkörper 30 festgelegt sind.

Anstelle des in Figur 1 dargestellten Ausführungsbeispiels mit einem Spreizdorn 32 könnte selbstverständlich auch eine andere Lösung, beispielsweise mit hydraulisch auseinander bewegbaren Hülsenschalen oder ähnliches verwendet werden.

Bei der in Figur 1 dargestellten Variante der Spreizeinrichtung 12 wirkt die Spreizhülse 18 lediglich auf einen Lagerabschnitt 6. Alternativ dazu könnte man die Spreizhülse 18 auch so ausgestalten, daß mehrere oder alle Lagerabschnitte 6 gleichzeitig mit einer die Bruchtrennung herbeiführenden Kraft F beaufschlagbar sind.

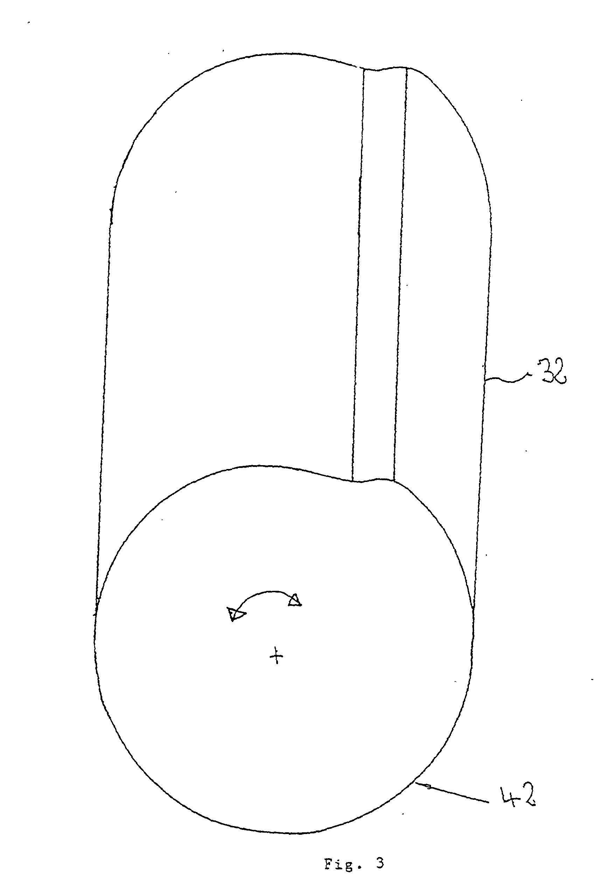

Wie in Figur 3 schematisch angedeutet ist, könnte man beispielsweise einen Spreizdorn 32 verwenden, dessen Außenumfangsfläche vom Querschnitt her gesehen als Steuerkurve ausgebildet ist. Die Krümmung der Außenumfangsfläche könnte beispielsweise als Evolventenprofil 42 ausgebildet werden. Durch eine geeignete Lagerung der Spreizhülse 18 auf einem derart geformten Spreizdorn 32 mit Steuerkurvenprofil könnte dann die Radialerweiterung der Spreizhülse durch Verdrehen des Spreizdornes 32 mit Bezug zur feststehenden Spreizhülse 18 erfolgen, so daß die aufzubringende Spreizkraft F in einfacher Weise durch die Ausgestaltung des Profils und durch den Drehwinkel des Spreizdornes 32 beeinflußbar ist. Bei dieser Variante wäre es besonders einfach, das Profil über den gesamten Wirkbereich des Spreizdornes 32 auszubilden, so daß der Anlageabschnitt 36 der Spreizhülse 32 etwa der Axiallänge der Lagerbohrung 4 entspricht und somit alle Lagerabschnitte 6 gleichzeitig bruchtrennbar sind.

Um zu gewährleisten, daß die beidseitig der Lagerbohrung 4 gelegenen Bereiche der Bruchfläche gleichförmig mit der zur Bruchtrennung erforderlichen Kraft F beaufschlagt werden, so daß beide Abschnitte gleichzeitig getrennt werden, muß sichergestellt werden, daß während des gesamten Bruchtrennvorganges die Bruchflächen über den gesamten Querschnitt gleichmäßig belastet sind.

Wie in Figur 2 links angedeutet ist, können dazu die Befestigungsschrauben für die Lagerschale 8 bereits vor dem Bruchtrennvorgang eingeschraubt werden, wobei das Anzugsmoment so gewählt werden muß, daß die Bruchtrennkraft noch aufbringbar ist. Durch die eingeschraubten Befestigungsschrauben 44 wird des weiteren verhindert, daß die Lagerschalen 8 nach dem Bruchtrennvorgang herabfallen, so daß die Zuordnung Lagerschale 8 und Lagerstuhl 10 stets aufrechterhalten bleibt.

In einer in Figur 1 und Figur 2 rechts angedeuteten Variante wirkt die Spreizeinrichtung 12 mit einem Fixiermechanismus 46 zusammen, bei dem jedem Lagerabschnitt 6 zwei federnd vorgespannte Andruckstempel 48 zugeordnet sind, die federnd auf die Oberseiten (Ansicht nach Figur 2) der Lagerschalen 8 wirken, wobei die Wirklinie jeweils senkrecht zu den Auflageabschnitten beidseitig der Lagerbohrung 4 verläuft.

Durch die beiden jeweils auf einen Lagerabschnitt 6 wirkenden Andruckstempel 48 werden die Lagerschalen 8 gleichmäßig in Richtung auf den Lagerstuhl 10 vorgespannt, so daß ein Kippen der Lagerschale 8 während des Bruchvorganges nahezu ausgeschlossen ist. Des weiteren wird durch den Fixiermechanismus 46 ebenfalls dafür gesorgt, daß nach dem Bruchtrennen die Lagerschalen 8 auf dem zugeordneten Lagerstuhl 10 bleiben und somit gemeinsam dem nächsten Arbeitsgang zuführbar sind, in dem beispielsweise die Fixierung der Lagerschalen 8 mittels Hilfsmitteln erfolgt oder aber bereits die Kurbelwellengleitlager eingebaut werden.

Im folgenden soll zum besseren Verständnis kurz die Funktionsweise der in Figur 1 dargestellten Spreizeinrichtung 12 dargestellt werden.

Zu Beginn des Bruchtrennvorganges wird das Kurbelgehäuse 2 über ein automatisches Handlingsgerät der Spreizeinrichtung 12 zugeführt und der Fixiermechanismus 46 abgesenkt, so daß die Lagerabschnitte 6 durch jeweils zwei Andruckstempel 48 mit einer vorbestimmten Anpreßkraft beaufschlagt sind. Alternativ oder zusätzlich dazu könnten auch die Befestigungsschrauben 44 eingeschraubt werden.

Anschließend wird die Spreizeinrichtung 12 von einem Endabschnitt der Lagerbohrung 4 her eingeführt bis der Anlageabschnitt 36 der Spreizhülse 18 mit Bezug zu dem in Figur 1 linken Lagerabschnitt 6 ausgerichtet ist. Der Spreizdorn 32 befindet sich in einer Relativposition, in der noch keine Spreizkraft auf diesem Lagerabschnitt aufgebracht wird. Anschließend wird der Spreizdorn 32 in Pfeilrichtang nach links (Ansicht nach Figur 1) bewegt, so daß der Spreizabschnitt 34 des Spreizdornes 32 in den Keilflächenabschnitt 26 eintaucht und die Spreizhülse 18 im Bereich des Anlageabschnittes 36 radial erweitert. Durch die Kerbwirkung im Bereich der beiden Kerben 14, 15 in der Umfangswandung der Lagerbohrung 4 wird an den beiden beidseitig der Lagerbohrung 4 angeordneten Bereichen des Lagerabschnittes 6 ein Bruch eingeleitet, der in der Regel entlang der gewünschten Bruchebene (Figur 2) erfolgt, die eine Horizontal-mittelebene der Lagerbohrung 4 ist. Durch die Andruckstempel 48 ist gewährleistet, daß die Lagerschale 8 auch bei Einleiten des Bruches beidseitig mit gleichen Kräften beaufschlagt ist, so daß beide Bruchteilflächen gleichzeitig getrennt werden.

Im Anschluß daran wird der Spreizdorn 32 entgegen der Pfeilrichtung zurückgezogen, so daß die Spreizhülse 18 wieder in ihre Ausgangsposition zurückfedert und die Spreizeinrichtung 12 wieder in Axialrichtung verschiebbar ist.

In gleicher Weise werden dann aufeinanderfolgend die weiteren Lagerabschnitte 6 von innen (links in Figur 1) nach außen (rechts in Figur 1) getrennt, wobei die Relativposition sämtlicher Lagerschalen 8 durch den Fixiermechanismus 46 und/oder die Befestigungsschrauben 44 aufrechterhalten bleibt.

Bei dieser Variante werden somit sämtliche Lagerabschnitte 6 nacheinander bruchgetrennt. In einer Alternativvariante kann die Spreizvorrichtung auch mit zwei koaxial und in Gegenrichtung wirkenden Spreizeinrichtungen versehen werden, die von jeweils einem Endabschnitt der Lagerbohrung 4 aus einführbar sind, so daß jeweils zwei Lagerabschnitte 6 gleichzeitig bruchtrennbar sind. Selbstverständlich könnten die beiden Spreizeinrichtungen 12 auch derart ausgestaltet werden, daß diese jeweils gleichzeitig mehrere Lagerabschnitte, d.h. beispielsweise die Hälfte aller Lagerabschnitte in einem Arbeitsgang bruchtrennt.

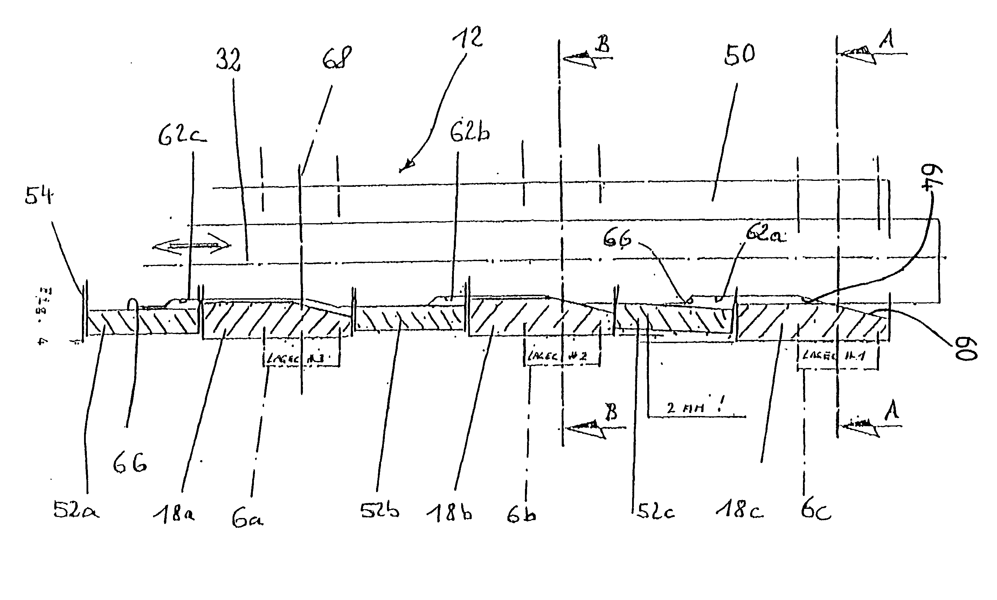

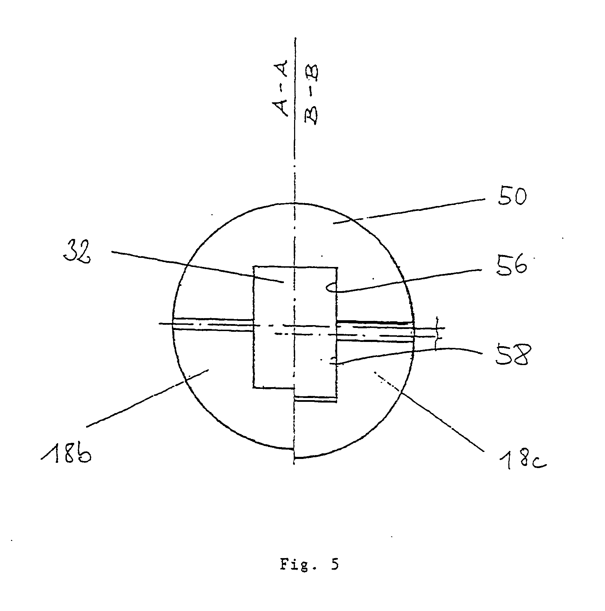

Figur 4 zeigt einen schematischen Längsschnitt durch ein Ausführungsbeispiel einer erfindungsgemäßen Spreizeinrichtung, bei der mit einem Hub des Spreizdornes 32 die Lagerabschnitte 6a, 6b, 6c einer Lagerbohrung aufeinanderfolgend gecrackt werden. In Figur 5 sind zwei Schnitte entlang der Linien A-A und B-B durch die Spreizeinrichtung aus Figur 4 dargestellt.

Das in den Figuren 4 und 5 dargestellte Ausführungsbeispiel hat einen Spreizdorn 32, der axial verschiebbar (siehe Pfeil in Figur 4) in einem Mantel aus einem Hülsenträger und wechselweise nebeneinander liegend angeordneten Spreizkörpern 18a, b, c sowie Abstandskörpern 52a, b, c geführt ist. Wie insbesondere aus den beiden Schnittdarstellungen gemäß Figur 5 entnehmbar ist, ist etwa der obere (Ansicht nach Figuren 4, 5) Teil des Spreizdornes 32 in einem halbschalenförmigen Hülsenträger 50 geführt, während der unten liegende Teil des Spreizdornes 32 im wesentlichen von den Abstandskörpern 52 und den sich jeweils anschließenden Spreizkörpern 18a ,b ,c verschiebbar aufgenommen ist.

Die Verbindung zwischen den Abstandskörpern 52a, 52b, 52c und den jeweils benachbarten Spreizkörpern 18a, 18b, 18c erfolgt über eine gelenkige oder federelastische Ankopplung 54, die in der Trennfuge zwischen den beiden Bauelementen 52, 18 angeordnet ist. Die Verbindung erfolgt dabei derart, daß der Abstandskörper 52a, b, c gegenüber den benachbarten Spreizkörpern 18a, b, c kippbar ist (siehe Abstandkörper 52c in Figur 4). Es besteht demnach eine elastische Verbindung zwischen den Abstandskörpern 52a, b, c und den Spreizkörpern 18a, b, c.

Wie insbesondere aus Figur 5 hervorgeht, hat der Spreizdorn 32 einen etwa rechteckförmigen Querschnitt. Selbstverständlich sind auch andere Querschnittsformen realisierbar. Zur Führung des Spreizdornes 32 ist in dem Hülsenträger 50 eine Rechtecknut 56 ausgebildet, die ein gleitendes Verschieben des Spreizdornes 32 ermöglicht. In entsprechender Weise sind in den jeweiligen, axial hintereinander liegenden Abständskörpern 52a, b, c, und in den Spreizkörpern 18a, b, c entsprechende Rechteckausnehmungen 58 vorgesehen. Der Hülsenträger 50 und die Abstands- und Stützkörper 52 umgreifen den Spreizdorn 32 halbschalenförmig, wobei zwischen den Axialkanten des Hülsenträgers 50 und des jeweils benachbarten Körpers 52, 18 ein Axial spalt verbleibt.

Gemäß Figur 4 ist die hülsenkörperseitige Rechtecknut 58 zu einem Endabschnitt hin keilförmig über eine Schrägfläche 60 erweitert, so daß ein trichterförmiger Einführbereich der Rechtecknut 58 gebildet wird.

Jedem der Spreizkörper 18a, b, c, der Spreizeinrichtung 12 ist eine Axialnut 62 am Außenumfang des Spreizdornes 32 zugeordnet. An dem in Figur 4 rechten, stirnseitigen Endabschnitt der Axialnut 62 ist eine schräg verlaufende Spreizfläche 64 ausgebildet, deren Anstellung mit Bezug zur Spreizdornachse derjenigen der Schräg- oder Auflauffläche 60 entspricht. Die von der Spreizfläche 64 entfernte Stirnfläche 66 jeder Axialnut 62a, ist steiler mit Bezug zur Spreizdornachse angestellt, als die Spreizfläche 64. Durch die Spreizflächen 64 werden Spreizkeile ausgebildet, über die die zum Cracken erforderliche Kraft auf die Spreizkörper 18a, b, c übertragen wird. Der Axialabstand der Spreizkeile ist dabei größer als der Axialabstand der Lagerabschnitte 6 bzw. der Spreizkörper 18a, b, c, so daß die Spreizflächen 64 nacheinander auf die zugeordneten Auflaufflächen 60 auflaufen.

Die Geometrie der Rechtecknut 58 in den Spreizkörpern 18a, .... ist dabei so gewählt, daß in der Ausgangsposition des Spreizdornes (siehe etwa Spreizkörper 18a mit Bezug zur Axialnut 62c) der in Axialrichtung verlaufende Innenumfangsabschnitt des Spreizkörpers 18a, b, c, in die jeweils zugeordnete Axialnut 62a, eintaucht, so daß die Auflauffläche 60 und die zugeordnete Spreizfläche 64 einander in Axialrichtung überlappend und parallel zueinander angeordnet sind. Das heißt, bei einer Axialverschiebung des Spreizdornes nach links in Figur 4 läuft die Spreizfläche 64 auf die Auflauffläche 60 des zugeordneten Spreizkörpers 18 auf. In dieser Auflaufposition befindet sich beispielsweise der Spreizkörper 18b mit Bezug zur zugeordneten Axialnut 62b.

Bei einer weiteren Bewegung des Spreizdornes 32 wird der in Anlage stehende Spreizkörper 18a, b, c aufgrund der Keilwirkung in Radialrichtung nach außen bewegt, wobei die beiden Flächen 60, 64 aneinander abgleiten bis die Anlage zwischen den beiden Flächen 64 und 60 in Abhängigkeit vom Hub des Spreizdorns 32 aufgehoben ist. Bei einer weiteren Bewegung des Spreizdorns 32 gleitet die Innenumfangsfläche des Spreizkörpers 18 dann mit seinem Axialabschnitt an dem sich an die Axialnut 62a anschließenden Außenumfangsabschnitt des Spreizdorns 32 ab. In dieser Position befindet sich der Spreizkörper 18c mit Bezug zur Axialnut 62a.

Die Abstandskörper 52a, b, c haben ebenfalls in Axialrichtung verlaufende Axialausnehmungen 66, deren Tiefe jedoch so gewählt ist, daß eine Axialverschiebung des Spreizdorns 32 nicht zu einer Radialverschiebung der Abstandskörper 52 führt. Das heißt, die Abstandskörper 52 liegen etwa am Außenumfang des Spreizdorns 32 an (siehe Abstandskörper 52b).

Die Funktion des in Figur 4 dargestellten Spreizdornes 12 sei nochmals zum besseren Verständnis erläutert.

In der Grund- oder Einführposition des Spreizdornes 12 umgreifen die Abstandskörper 52 den Außenumfang des Spreizdornes 32. Die Spreizkörper 18a, b, c tauchen mit ihren in Axialrichtung verlaufenden Nutabschnitten in die jeweils zugeordnete Axialnut 62 des Spreizdorns 32 ein, so daß die Auflauffläche 60 und die Spreizfläche 64 im Axialabstand zueinander stehen. Der Außendurchmesser der Spreizeinrichtung 12 ist in diesem Ausgangszustand minimal.

Der Spreizdorn wird dann in die Lagerbohrung eingeführt, bis jedem Lagerabschnitt 6a, b, c ein Spreizkörper 18a, 18b bzw. 18c zugeordnet ist und dieser derart ausgerichtet ist, daß die Auflauffläche 60 die Lagermittelebene 68 schneidet.

Nachdem die Spreizeinrichtung 12 in diese Relativposition mit Bezug zu den Lagerabschnitten 6a, b, c, gebracht wurde, wird die Fixiereinrichtung auf die Lagerdeckel aufgedrückt, so daß diese lagefixiert sind. Bei einem sich anschließenden Hub des Spreizdorns 32 nach links (Ansicht nach Figur 4) gelangt zunächst die Spreizfläche 64 der Axialnut 62a in Anlage an die Auflauffläche 60 des Spreizkörpers 18c. Die Auflaufflächen 60 der bei der sonstigen Spreizkörper 18a, 18b, 18c stehen noch im Abstand zu den zugeordneten Spreizkörpern 64 der Axialnuten 62b bzw. 62c. Beim weiteren Hub des Spreizdornes 32 wird der Spreizkörper 18c (siehe Darstellung nach Figur 5) in Radialrichtung nach außen (unten) bewegt, so daß der Lagerabschnitt 6c aufgrund der Durchmesservergrößerung der Spreizeinrichtung 12 in diesem Bereich bruchgetrennt wird. Die Radialbewegung des Spreizkörpers 18c mit Bezug zum Hülsenträger 50 ist beendet, wenn die Anlage zwischen den beiden Flächen 60, 64 aufgehoben ist. Dieser Zustand ist in Figur 4 dargestellt. Danach läuft die Spreizfläche 64 auf die Auflauffläche 60 des Spreizkörpers 18b auf, so daß dieser beim weiteren Hub entsprechend radial nach außen bewegt und somit der Lagerabschnitt 6b bruchgetrennt wird. Beim Auflaufen der Spreizfläche 64 der Axialnut 62b auf den Spreizkörper 18b stehen die entsprechenden Flächen des Spreizkörpers 18a und der Axialnut 62c noch im Axialabstand.

Bei der weiteren Hubbewegung des Spreizdornes 32 wird dann in entsprechender Weise der Lagerabschnitt 6b bruchgetrennt und die Spreizfläche 64 der Axialnut 62c gelangt dann in Anlage an die Auflauffläche 60 des Spreizkörpers 18a, so daß beim weiteren Hub auch der Lagerabschnitt 6a bruchgetrennt wird. Das heißt, bei dieser Variante sind die Geometrien der Axialnut 62 und des jeweils zugeordneten Spreizkörpers 18a, b, c jeweils so ausgelegt, daß in die Lagerabschnitte 6a, 6b, 6c nacheinander bruchgetrennt werden. Durch diese Maßnahme ist gewährleistet, daß die für die Bruchtrennung aufzuwendenden Kräfte minimal sind, da jeweils lediglich ein Lagerabschnitt bruchgetrennt wird.

Die Radialverschiebung der Spreizkörper 18a, b, c zueinander wird durch die gelenkige oder federnde Anbindung an die Abstandskörper 52 ermöglicht. Das heißt, beispielsweise bei der Radialbewegung des Spreizkörpers 18c gegenüber dem Hülsenträger 50 kann der benachbarte Spreizkörper 18b aufgrund der Kippbewegung des Abstandskörpers 52c in seiner Grundposition verbleiben, so daß ein vorzeitiges Bruchtrennen des Lagerabschnittes 6b verhindert wird.

Nachdem sämtliche Lagerabschnitte einer Lagerbohrung bruchgetrennt sind, wird der Spreizdorn 32 wieder in der Darstellung nach Figur 1 nach rechts bewegt, so daß die Spreizkörper 18a, b, c wieder federnd in ihre Grundposition zurückschnappen. Der Spreizdorn wird dann aus der Lagerbohrung herausgezogen und ist nun bereit für den nächsten Bruchtrennvorgang.

Bei der vorbeschriebenen Variante verbleibt der Hülsenträger 50 im wesentlichen in seiner Relativposition mit Bezug zur Lagerbohrung, während die Spreizkörper 18a, b, c eine Radialbewegung und die Abstandskörper 52 eine Kippbewegung durchführen. Vorstellbar sind auch Varianten des vorbeschriebenen Ausführungsbeispiels, bei denen anstelle des durchgehenden, Hülsenträgers 50 ebenfalls im Axialabstand zueinander stehen halbschalenförmige obere Spreizkörper mit dazwischen liegenden Abstandskörpern vorgesehen werden, so daß sich die Spreizeinrichtung beidseitig in Radialrichtung erweitert.

Wie bereits eingangs erwähnt wurde, läßt sich das erfindungsgemäße Verfahren besonders vorteilhaft bei Graugußkurbelgehäusen 2 anwenden. Selbstverständlich sind die vorbeschriebenen Verfahren und Vorrichtungen nicht nur zum Bruchtrennen von Kurbelgehäuselagerabschnitten sondern prinzipiell zum Bruchtrennen von Gehäusen für beliebige Lagergassen geeignet, bei denen eine Vielzahl von Lagerabschnitten koaxial hintereinander angeordnet sind.

Offenbart ist ein Verfahren zum Bruchtrennen eines Gehäuseblocks, der eine Lagerbohrung mit einer Vielzahl von koaxial hintereinander liegenden Lagerabschnitten hat. Bei dem erfindungsgemäßen Verfahren wird eine Spreizeinrichtung in die Lagerbohrung eingeführt und die Lagerabschnitte gleichzeitig oder nacheinander in einem Lagerdeckel und einen Lagerstuhl bruchgetrennt. Die zur Durchführung des Verfahrens verwendbare Spreizeinrichtung läßt sich in Axialrichtung in die Lagerbohrung einführen, so daß sämtliche Lagerabschnitte der Lagerbohrung gleichzeitig oder nacheinander bruchtrennbar sind.

## Patentansprüche

1. Verfahren zum Herstellen einer Lagerschale (8) und eines Lagerstuhls (10) eines Gehäuseblocks (2), der eine Lagerbohrung (4) mit einer Vielzahl von koaxial hintereinander liegenden Lagerabschnitten (6) mit jeweils einer Lagerschale (8) und einem Lagerstuhl (10) hat, mit den Schritten:
- Ausbilden von jeweils einstückig mit dem Gehäuseblock (2) ausgebildeten Lagerabschnitten (6);
- Einbringen von zwei einander diametral gegenüberliegenden Kerben (14, 15) in die Umfangswandung, so daß eine auszubildende Trennebene des Lagerabschittes (6) vorgegeben ist;
- Einführen einer Spreizeinrichtung (12) in eine Relativposition in die Lagerbohrung (4);
- Spreizen der Spreizeinrichtung (12) in der Relativposition derart, daß die Lagerabschnitte (6) des Gehäuseblocks (2) nacheinander bruchgetrennt werden;
**dadurch gekennzeichnet, daß** vor dem Einführen einer Spreizeinrichtung (12) der folgende Schritt ausgeführt wird:
- Fixieren der die Lagerschale (8) bildenden Teile der Lagerabschnitte (6) mit Bezug zu dem jeweils zugeordneten Lagerstuhl (10) mittels einer Fixiereinrichtung, deren Stempel in Anlage an zumindest einen Lagerabschnitt (10) bringbar ist.

2. Spreizeinrichtung zum Bruchtrennen von Lagerabschnitten (6) eines Gehäuseblocks (2), der von einer Lagerbohrung (4) in einer Vielzahl von koaxial hintereinander angeordneten Lagerabschnitten (6) durchsetzt ist, mit einem Spreizdorn (32), auf dem zumindest eine Spreizhülse (18) geführt ist, die zum Bruchtrennen durch eine Betätigung des Spreizdornes (32) aus einer Einführ- oder Relativposition in eine Spreizposition bringbar ist,
**gekennzeichnet durch**
eine Fixiereinrichtung mit einem Stempel (48) für jeden Lagerabschnitt (6), der während des Spreizvorganges in Anlage an den zugeordneten Lagerdeckel bringbar ist, wobei die Axiallänge des Spreizdorns (32) zumindest größer als die halbe Axiallänge der Lagerbohrung (4) ist.

3. Spreizeinrichtung nach Patentanspruch 2, dadurch gekennzeichnet, daß der Spreizkörper zumindest zwei federnd aufeinander zu vorgespannte Hülsenschalen (22, 23) hat, die gemeinsam eine Innenbohrung mit einem sich verjüngenden Abschnitt (26) umgreifen, dem ein Spreizabschnitt (34) am hülsenseitigen Endabschnitt des Spreizdornes (32) zugeordnet ist.

4. Spreizeinrichtung nach Patentanspruch 3, dadurch gekennzeichnet, daß am Außenumfang der Spreizhülse (18) im Bereich des sich verjüngenden Abschnittes ein radial erweiterter Anlageabschnitt (36) ausgebildet ist, dessen Axiallänge größer als diejenige des Lagerabschnittes (6) ist.

5. Spreizeinrichtung nach Patentanspruch 2, dadurch gekennzeichnet, daß der Spreizkörper zumindest zwei federnd aufeinander zu vorgespannte Hülsenschalen (22, 23) hat, die den Spreizdorn (32) umgreifen, dessen Außenumfangsfläche mit einem exzentrischen Steuerflächenabschnitt ausgebildet ist, so daß durch Relativverdrehung des Spreizdornes (32) die Spreizhülse (18) in Radialrichtung erweiterbar ist.

6. Spreizeinrichtung nach einem der Patentansprüche 2 bis 5, dadurch gekennzeichnet, daß die Spreizeinrichtung (12) zwei koaxial bewegbare Spreizdorne (32) mit jeweils zumindest einem Spreizkörper hat.

7. Spreizeinrichtung nach Patentanspruch 2, dadurch gekennzeichnet, daß dem Spreizdorn (32) eine Vielzahl von axial hintereinderliegenden Spreizkörpern (18a, 18b, 18c) zugeordnet ist, die nacheinander in die Spreizposition bringbar sind.

8. Spreizeinrichtung nach Patentanspruch 7, dadurch gekennzeichnet, daß jeder Spreizkörper (18a, 18b, 18c) eine Auflauffläche (60) für jeweils eine am Außenumfang des Spreizdorns (32) ausgebildete Spreizfläche (64) hat, wobei der Axialabstand der Spreizflächen (64) größer als der Axialabstand der Auflaufflächen (60) ist.

9. Spreizeinrichtung nach Patentanspruch 8, dadurch gekennzeichnet, daß die Auflauffläche (60) eine Schrägfläche ist, über die eine Innenumfangsfläche (58) des Spreizkörpers (18a, 18b, 18c) radial erweitert ist und daß die Spreizfläche (64) die Stirnseite einer Axialnut (62a, 62b, 62c) am Aussenumfang des Spreizdorns (32) ist, deren Axiallänge vorzugsweise größer als ein Spreizhub des Spreizdorns (30) ist.

10. Spreizeinrichtung nach einem der Patentansprüche 7 bis 9, dadurch gekennzeichnet, daß die Spreizkörper (18a, 18b, 18c) gelenkig oder federnd miteinander verbunden sind.

## Claims

1. A process for manufacturing a bearing shell (8) and a bearing block (10) of a housing block (2) including a bearing bore (4) with a multiplicity of bearing portions (6) having a consecutive coaxial arrangement and each comprising a bearing shell (8) and a bearing block (10), said process comprising the steps of:
- forming bearing portions (6) each formed integrally with said housing block (2);
- introducing two diametrally opposed notches (14, 15) in the peripheral wall so as to predetermine a plane of separation to be established of said bearing portion (6);
- introducing spreader means (12) in a relative position into said bearing bore (4);
- spreading said spreader means (12) in the relative position such that said bearing portions (6) of said housing block (2) are consecutively fracture separated;
**characterised in that** prior to introducing spreader means (12), the following step is performed:
- immobilising those parts of said bearing portions (6) forming said bearing shell (8)-with respect to the respectively associated bearing block (10) by means of clamping means, the die of which is capable of being taken into contact with at least one bearing portion (10).

2. Spreader means for fracture separating bearing portions (6) of a housing block (2) through which a bearing bore (4) extends in a multiplicity of bearing portions (6) having a consecutive coaxial arrangement, including a spreader mandrel (32) on which at least one spreader sleeve (18) is guided which may be taken from an introduction position or relative position into a spread position for fracture separation through actuation of said spreader mandrel (32),
**characterised by**
clamping means including one die (48) for each bearing portion (6), which is capable of being taken into contact with the associated bearing lid during the spreading process, the axial length of said spreader mandrel (32) being greater at least than half the axial length of said bearing bore (4).

3. Spreader means according to claim 2, characterised in that said spreader member comprises at least two sleeve shells (22, 23) resiliently pre-stressed toward each other and jointly encompassing an internal bore having a tapered portion (26) to which a spreader portion (34) at the sleeve-side end portion of said spreader mandrel (32) is associated.

4. Spreader means according to claim 3, characterised in that a radially widening contact portion (36) having a greater axial length than said bearing portion (6) is formed on the outer periphery of said spreader sleeve (18) in the range of said tapered portion.

5. Spreader means according to claim 2, characterised in that said spreader member comprises at least two sleeve shells (22, 23) resiliently pre-stressed toward each other and encompassing said spreader mandrel (32), the outer peripheral surface of which is formed to have an eccentric control surface portion, so that upon a relative rotation of said spreader mandrel (32), said spreader sleeve (18) may be expanded in the radial direction.

6. Spreader means according to any one of claims 2 to 5,
characterised in that said spreader means (12) comprise two coaxially displaceable spreader mandrels (32) each having at least one spreader member.

7. Spreader means according to claim 2, characterised in that a multiplicity of spreader members (18a, 18b, 18c) having a consecutive axial arrangement and capable of successively being taken into the spread position are associated with said spreader mandrel (32).

8. Spreader means according to claim 7, characterised in that each spreader member (18a, 18b, 18c) includes a leading surface (60) for one respective spreader surface (64) each formed at the outer periphery of said spreader mandrel (32), wherein the axial distance of said spreader surfaces (64) is greater than the axial distance of said leading surfaces (60).

9. Spreader means according to claim 8, characterised in that said leading surface (60) is an inclined surface through which an inner peripheral surface (58) of said spreader member (18a, 18b, 18c) is radially expanded, and that said spreader surface (64) is the front side of an axial groove (62a, 62b, 62c) at the outer periphery of said spreader mandrel (32), the axial length of which is preferably greater than a spreading stroke of said spreader mandrel (30).

10. Spreader means according to any one of claims 7 to 9, characterised in that said spreader members (18a, 18b, 18c) are connected with each other in an articulated or resilient manner.

## Revendications

1. Procédé pour fabriquer un coussinet de palier (8) et une chaise de palier (10) d'un bloc de carter (2), qui possède un alésage (4) comportant une multiplicité de sections de palier (6) disposées coaxialement les unes derrière les autres et comportant chacune un coussinet de palier (8) et une chaise de palier (10), comportant les étapes consistant à:
- former des sections de palier (6) réalisées chacune d'un seul tenant avec le bloc de carter (2);
- former deux encoches diamétralement opposées (14, 15) dans la paroi circonférentielle de telle sorte qu'un plan de séparation devant être formé de la section de palier (6) est prédéterminé;
- introduire un dispositif d'écartement (12) dans une position relative dans l'alésage de palier (4);
- écarter le dispositif d'écartement (12) dans la position relative de telle sorte que les sections de palier (6) du bloc de carter (2) sont séparées les unes des autres par rupture;
caractérisé en ce qu'avant l'introduction d'un dispositif d'écartement (12), on met en oeuvre l'étape suivante consistant à:
- fixer les parties, qui forment le coussinet de palier (8), des sections de palier (6) par rapport à la chaise de palier (10) respectivement associée, au moyen d'un dispositif de fixation, dont le poinçon peut être appliqué contre au moins une section de palier (10).

2. Dispositif d'écartement pour séparer par rupture des sections de palier (6) d'un bloc de carter (2), qui est traversé par un alésage de palier (4) dans une multiplicité de sections de palier (6) disposées coaxialement les unes derrière les autres, comportant un mandrin d'écartement (32), sur lequel est guidée au moins une douille d'écartement (18), qui pour la séparation par rupture peut être amenée, au moyen d'un actionnement de mandrin d'écartement (32), depuis une position d'introduction ou position relative dans une position d'écartement,
caractérisé par
un dispositif de fixation comportant un poinçon (48) pour chaque section de palier (6), qui pendant l'opération d'écartement peut être amené à s'appliquer contre le couvercle de palier associé, la longueur axiale du mandrin d'écartement (39) étant au moins supérieure à la moitié de la longueur axiale de l'alésage de palier (4).

3. Dispositif d'écartement selon la revendication 2, caractérisé en ce que le corps d'écartement possède au moins deux coques formant douille (22, 23), qui sont précontraintes élastiquement l'une contre l'autre et entourent conjointement un alésage intérieur possédant une partie (26) qui se rétrécit et à laquelle est associé une section d'écartement (34) présente sur la section d'extrémité, située du côté de la douille, du mandrin d'écartement (32).

4. Dispositif d'écartement selon la revendication 3, caractérisé en ce que sur la périphérie extérieure de la douille d'écartement (18) et dans la zone de la section de forme rétrécie, est formée une section d'application (36), qui s'élargit radialement et dont la largeur axiale est supérieure à celle de la section de palier (6).

5. Dispositif d'écartement selon la revendication 2, caractérisé en ce que le corps d'écartement comporte au moins deux coques formant douille (22, 23) précontraintes élastiquement l'une contre l'autre et qui entourent le mandrin d'écartement (39), dont la surface périphérique extérieure est formée avec une partie excentrique de surface de commande de sorte que sous l'effet du déplacement relatif du mandrin d'écartement (32), la douille d'écartement (18) peut être élargie dans la direction radiale.

6. Dispositif d'écartement selon l'une des revendications 2 à 5, caractérisé en ce que le dispositif d'écartement (12) possède deux mandrins d'écartement (32) déplaçables coaxialement et comportant chacun au moins un corps d'écartement.

7. Dispositif d'écartement selon la revendication 2, caractérisé en ce qu'au mandrin d'écartement (32) est associée une multiplicité de corps d'écartement (18a, 18b, 18c), qui sont disposés les uns derrière les autres axialement et peuvent être amenés successivement dans la position d'écartement.

8. Dispositif d'écartement selon la revendication 7, caractérisé en ce que chaque corps d'écartement (18a, 18b, 18c) possède une surface de montée (60) pour respectivement une surface d'écartement (64) formée sur la périphérie extérieure du mandrin d'écartement (32), la distance axiale des surfaces d'écartement (64) étant supérieure à la distance axiale des surfaces de montée (60).

9. Dispositif d'écartement selon la revendication 8, caractérisé en ce que la surface de montée (60) est une surface oblique, sur laquelle une surface périphérique intérieure (58) du corps d'écartement (18a, 18b, 18c) est élargie radialement et que la surface d'écartement (64) est la face frontale d'une rainure axiale (62a, 26b, 62c) située sur la périphérie extérieure du mandrin d'écartement (32) et dont la longueur axiale est de préférence supérieure à une course d'écartement du mandrin d'écartement (32).

10. Dispositif d'écartement selon l'une des revendications 7 à 9, caractérisé en ce que les corps d'écartement (18a, 18b, 18c) sont reliés entre eux d'une manière articulée ou élastiquement.
